Europäisches Patentamt

European Patent Office

Office européen des brevets

(19)

(11) Veröffentlichungsnummer: **0 102 452**
**B1**

(12) # EUROPÄISCHE PATENTSCHRIFT

(45) Veröffentlichungstag der Patentschrifft:
17.01.90

(21) Anmeldenummer: 83104882.2

(22) Anmeldetag: 18.05.83

(51) Int. Cl. 4: **G 02 F    1/133**

(54) **Multiplexbare Flüssigkristallzelle.**

(30) Priorität: 07.08.82 DE 3229584

(43) Veröffentlichungstag der Anmeldung:
14.03.84 Patentblatt 84/11

(45) Bekanntmachung des Hinweises auf die Patenterteilung:
17.01.90 Patentblatt 90/03

(84) Bennante Vertragsstaaten:
DE FR GB IT SE

(56) Entgegenhaltungen:
EP-A-0 030 600
GB-A-2 050 031

(73) Patentinhaber: **VDO Adolf Schindling AG**
Gräfstrasse 103
D-6000 Frankfurt/Main 90 (DE)

(72) Erfinder: **Nickol, Friedrich Wilhelm**
Am Honigbaum 35
D-6239 Eppstein 4 (DE)
Erfinder: **Baeger, Holm, Dr.**
Salzbornstrasse 1
D-6231 Schwalbach (DE)

(74) Vertreter: **Könekamp, Herbert, Dipl.-Ing.**
Sodener Strasse 9
D-6231 Schwalbach (DE)

EP 0 102 452 B1

## Beschreibung

Die Erfindung bezieht sich auf eine multiplexbare Flüssigkristallzelle mit zwei im Abstand zueinander angeordneten Substraten, die zwischen sich einen mit Flüssigkristallsubstanz gefüllten Zellenraum bilden, mit zellenraumseitig auf dem einen Substrat angeordneten Streifenelektroden und zellenraumseitig auf dem anderen Substrat angeordneten, den Streifenelektroden gegenüberliegenden Bildelektroden, die über Metall-Isolator-Metall-Elemente mit ebenfalls auf dem anderen Substrat angeordneten Datenleitungen verbunden sind.

Bei einer derartigen Flüssigkristallzelle ist es bekannt, auf das mit den Bildelektroden zu versehende Substrat zuerst durch Sputtern von Tantal Datenleitungen aufzubringen. Durch partielles Anodisieren dieser Schicht wird eine Isolierschicht auf der Tantalschicht aufgebaut. Durch Aufbringen weiteren Leitermaterials sowohl auf einen Teil der Datenleitung als auch auf einen Teil des unbedeckten Substrats wird ein Verbindungskontakt hergestellt, der in den Bereich hineinreicht, auf den anschließend das Material für die Bildelektrode aufgebracht wird. Dabei wird durch die Datenleitung, die Isolierschicht und den Verbindungskontakt das Metall-Isolator-Metall-Element gebildet, das als sogenanntes nichtlineares Element zur Ansteuerung der Bildelektrode dient.

Die Herstellung dieser Flüssigkristallzelle benötigt nicht nur sehr viele Verfahrensschritte, sondern ist auch durch das anodische Aufbauen der Isolierschicht aufwendig.

Aus der GB-A-2 050 031 ist eine Flüssigkristallzelle der eingangs genannten Art bekannt. Dabei ist auf der Datenleitung bzw. auf dem Verbindungskontakt eine die Isolationsschicht des Metall-Isolator-Metall-Elements bildende Isolationsschicht angeordnet.

Aus der EP-A-30 600 ist eine Flüssigkristallzelle bekannt, welche Bildelektroden aufweist, die von einer Isolationsschicht überdeckt sind.

Sowohl die nichttransparenten, den Kontrast der Anzeige verringernden Datenleitungen, als auch die spiegelnden Bildelektroden stören das Erscheinungsbild der Anzeige.

Aufgabe der Erfindung ist es, eine Flüssigkristallzelle nach dem Oberbegriff zu schaffen, die einfach herstellbar ist und ein kontrastreiches guterfaßbares Erscheinungsbild aufweist. Diese Aufgabe wird erfindungsgemäß dadurch gelöst, daß auf der auf dem anderen Substrat angeordneten Bildelektrode eine die Bildelektrode vollständig überdeckende, transparente Isolationsschicht angeordnet ist, die wiederum einen zur Datenleitung führenden Verbindungskontakt trägt. Durch diese Ausbildung kann die Anzahl der Herstellungsschritte verringert werden, da das Metall-Isolator-Metall-Element (MIM-Element) aus der Bildelektrode, der Isolationsschicht und dem Verbindungskontakt besteht und somit entgegen der bekannten Flüssigkristallzelle die Bildelektrode gleichzeitig Bestandteil des MIM-Elements ist. Es versteht sich, daß anstatt der Metallschichten des MIM-Elements auch Halbleiterschichten verwandt werden können.

Die ermöglichte feine Struktur der Bildelektroden, die ohne wesentliche Justageprobleme gegenüber den Datenleitungen und Verbindungskontakten herstellbar ist, ermöglicht eine gute Multiplexbarkeit, was zu einem besseren optischen Kontrast und damit einer besseren Erfaßbarkeit der Informationen führt.

Die vollständige Überdeckung der Bildelektrode durch die Isolationsschicht führt dazu, daß durch diese Schicht sowohl die Funktion als Teil des MIM-Elements als auch die Funktion als Isolator für die Bildelektrode erfüllt.

Ein solcher in einem separaten Arbeitsgang aufzubringender Isolator ist somit nicht erforderlich.

Besitzt diese Isolationsschicht einen Brechungsindex, der zwischen dem Brechungsindex der Flüssigkristallsubstanz und dem Brechungsindex der transparenten Bildelektrode liegt, so erfüllt sie noch eine dritte Funktion, indem sie durch Entspiegeln der Bildelektroden zu deren besserer und kontrastreicherer Erfaßbarkeit führt.

Die Isolationsschicht kann dabei einen Brechungsindex zwischen 1,5 und 2,0, vorzugsweise von 1,8 besitzen.

Eine weitere Funktion kann durch die Isolationsschicht noch dadurch erfüllt werden, daß sie eine die angrenzende Flüssigkristallsubstanz orientierende Eigenschaft besitzt und somit gleichzeitig noch Orientierungsschicht ist.

Bestehen die Datenleitungen und/oder der Verbindungskontakt aus einem transparenten Werkstoff, z. B. aus Indiumzinnoxid, so können sie nicht das gute Erscheinungsbild der Anzeige stören. Vorzugsweise werden dabei die Datenleitung und der Verbindungskontakt in einem Arbeitsgang aufgebracht.

Überdeckt eine Entspiegelungsschicht die Bildelektrode und/oder die Datenleitung und/oder den Verbindungskontakt, so kann von keinem der überdeckten Teile eine den Kontrast und die Ablesbarkeit beeinträchtigende Spiegelung ausgehen. Diese Entspiegelungsschicht kann dabei weiterhin noch eine die angrenzende Flüssigkristallsubstanz orientierende Eigenschaft sowie eine isolierende Eigenschaft besitzen und damit eine Vielfachfunktion erfüllen.

Ein Ausführungsbeispiel der Erfindung ist in der Zeichnung dargestellt und wird im folgenden näher beschrieben.

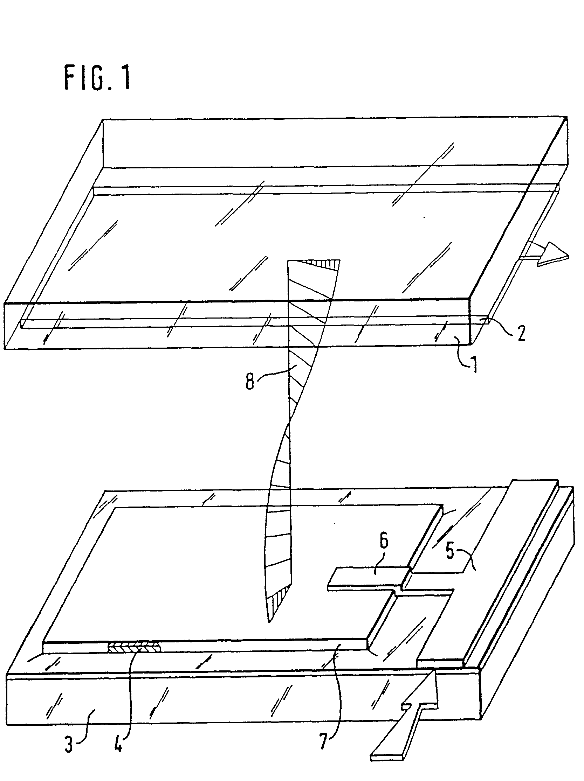

Es zeigt Figur 1 eine perspektivische Ansicht einer erfindungsgemäßen Flüssigkristallzelle.

Die in der Figur dargestellte Flüssigkristallzelle besteht aus einem oberen Substrat 1 aus Glas, das eine ansteuerbare Streifenelektrode 2 trägt. Das untere ebenfalls aus Glas bestehende Substrat 3 trägt eine Bildelektrode 4.

Weiterhin ist auf dem Substrat 3 eine Datenleitung 5 und mit dieser einstückig ein zur Bildelektrode 4 führender Verbindungskontakt 6 angeordnet. Zwischen dem die Bildelektrode 4 teilweise überlappenden Verbindungskontakt 6 und der Bildelektrode 4 ist eine Isolationsschicht 7 angeordnet, die die gesamte Bildelektrode 4 sowie die gesamte, nicht von der Bildelektrode 4 überdeckte Substrat 3 abdeckt.

Zwischen den Substraten, welche in der Figur explosionsartig im Abstand zueinander dargestellt sind, ist die nicht dargestellte Flüssigkristallsubstanz angeordnet, die durch eine Helix 8 symbolisiert ist.

Die Bildelektrode 4 sowie die eine Auftragsschicht bildenden Datenleitungen 5 und Verbindungskontakte 6 sind aus Indiumzinnoxid und damit transparent. Ebenfalls transparent ist die Isolationsschicht 7 ausgebildet, so daß von keinem dieser Bauteile eine Beeinträchtigung des Erscheinungsbildes der Anzeige erfolgen kann.

Besitzt die Isolationsschicht 7 einen Brechungsindex, der zwischen dem Brechungsindex der Flüssigkristallsubstanz und dem Brechungsindex der transparenten Bildelektrode liegt und weiterhin eine die angrenzende Flüssigkristallsubstanz orientierende Eigenschaften hat, so werden mehrere Funktionen durch sie erfüllt und sonst zusätzliche Arbeitsgänge zur Herstellung diese Funktionen erfüllender Schicht eingespart.

## Patentansprüche

1. Multiplexbare Flüssigkristallzelle mit zwei im Abstand zueinander angeordneten Substraten, die zwischen sich einen mit Flüssigkristallsubstanz gefüllten Zellenraum bilden, mit zellenraumseitig auf dem einen Substrat angeordneten Streifenelektroden und zellenraumseitig auf dem anderen Substrat angeordneten, den Streifenelektroden gegenüberliegenden Bildelektroden, die über Metall-Isolator-Metall-Elemente mit ebenfalls auf dem anderen Substrat angeordneten Datenleitungen verbunden sind, dadurch gekennzeichnet, daß auf der auf dem anderen Substrat (3) angeordneten Bildelektrode (4) eine die Bildelektrode vollständig überdeckende, transparente Isolationsschicht (7) angeordnet ist, die wiederum einen zur Datenleitung (5) führenden Verbindungskontakt (6) trägt.

2. Flüssigkristallzelle nach Anspruch 1 dadurch gekennzeichnet, daß die Isolationsschicht (7) einen Brechungsindex besitzt, der zwischen dem Brechungsindex der Flüssigkristallsubstanz und dem Brechungsindex der transparenten Bildelektrode (4) liegt.

3. Flüssigkristallzelle nach Anspruch 2, dadurch gekennzeichnet, daß die Isolationsschicht (7) einen Brechungsindex zwischen 1,5 und 2,0 besitzt.

4. Flüssigkristallzelle nach Anspruch 3, dadurch gekennzeichnet, daß die Isolationsschicht (7) einen Brechungsindex von 1,8 besitzt.

5. Flüssigkristallzelle nach einem der vorhergehenden Ansprüche, dadurch gekennzeichnet, daß die Isolationsschicht (7) eine die angrenzende Flüssigkristallsubstanz orientierende Eigenschaft besitzt.

6. Flüssigkristallzelle nach einem der vorhergehenden Ansprüche, dadurch gekennzeichnet, daß die Datenleitung (5) und/oder der Verbindungskontakt (6) aus einem transparenten Werkstoff bestehen.

7. Flüssigkristallzelle nach Anspruch 6, dadurch gekennzeichnet, daß die Datenleitung (5) und/oder der Verbindungskontakt (6) aus Indiumzinnoxid besteht.

8. Flüssigkristallzelle nach einem der vorhergehenden Ansprüche, dadurch gekennzeichnet, daß die Datenleitung (5) und der Verbindungskontakt (6) in einem Arbeitsgang aufgebracht sind.

9. Flüssigkristallzelle nach Anspruch 1 dadurch gekennzeichnet, daß eine Entspiegelungsschicht die Bildelektrode (4) und/oder die Datenleitung (5) und/oder den Verbindungskontakt (6) überdeckt.

10. Flüssigkristallzelle nach Anspruch 9, dadurch gekennzeichnet, daß die Entspiegelungsschicht eine die angrenzende Flüssigkristallsubstanz orientierende Eigenschaft besitzt.

11. Flüssigkristallzelle nach Anspruch 9, dadurch gekennzeichnet, daß die Entspiegelungsschicht eine isolierende Eigenschaft besitzt.

## Claims

1. Multiplexable liquid crystal cell comprising two substrates which are arranged at a distance from one another and which form between themselves a cell space filled with liquid crystal substance, with strip electrodes arranged on one substrate on the cell space side and image electrodes which are opposite to the strip electrodes and are arranged on the other substrate on the cell space side and which are connected via metal-insulator-metal elements to data lines which are also arranged on the other substrate, characterized in that on the image electrode (4) arranged on the other substrate (3), a transparent insulation layer (7), which completely covers the image electrode, is arranged which, in turn, carries a connecting contact (6) leading to the data line (5).

2. Liquid crystal cell according to Claim 1, characterized in that the insulation layer (7) has a refractive index which is between the refractive index of the liquid crystal substance and the refractive index of the transparent image electrode (4).

3. Liquid crystal cell according to Claim 2, characterized in that the insulation layer (7) has a refractive index of between 1.5 and 2.0.

4. Liquid crystal cell according to Claim 3, characterized in that the insulation layer (7) has a refractive index of 1.8.

5. Liquid crystal cell according to one of the preceding claims, characterized in that the insulation layer (7) has a characteristic which orientates the adjoining liquid crystal substance.

6. Liquid crystal cell according to one of the preceding claims, characterized in that the data line (5) and/or the connecting contact (6) consist of a transparent material.

7. Liquid crystal cell according to Claim 6, characterized in that the data line (5) and/or the connecting contact (6) consists of indium tin oxide.

8. Liquid crystal cell according to one of the preceding claims, characterized in that the data line (5) and the connecting contact (6) are applied in one process cycle.

9. Liquid crystal cell according to Claim 1, characterized in that an anti-reflection layer covers the image electrode (4) and/or the data line (5) and/or the connecting contact (6).

10. Liquid crystal cell according to Claim 9, characterized in that the anti-reflection layer has a characteristic which orientates the adjoining liquid crystal substance.

11. Liquid crystal cell according to Claim 9, characterized in that the anti-reflection layer has an insulating characteristic.

**Revendications**

1. Cellule multiplexable à cristaux liquides comportant deux substrats disposés à une certaine distance l'un de l'autre, qui constituent entre eux une cellule remplie d'une substance à propriétés de cristaux liquides, avec des électrodes à bandes disposées sur l'un des substrats du côté cellule et des électrodes de formation d'images disposées en regard des électrodes à bandes, du côté cellule, sur l'autre substrat, électrodes qui sont reliées au moyen d'éléments métal-isolateur-métal à des lignes de transmission de données également disposées sur l'autre substrat, cellule caractérisée en ce qu'il est disposé sur l'électrode (4) de formation d'images, disposée sur l'autre substrat (3), une couche isolante (7) transparente recouvrant entièrement l'électrode de formation d'images et qui porte pour sa part un contact (6) de jonction conduisant à la ligne (5) de transmission de données.

2. Cellule à cristaux liquides selon la revendication 1, caractérisée en ce que la couche isolante (7) possède un indice de réfraction, qui se situe entre l'indice de réfraction de la substance à propriétés de cristaux liquides et l'indice de réfraction de l'électrode (4) transparente de formation d'images.

3. Cellule à cristaux liquides selon la revendication 2, caractérisée en ce que la couche isolante (7) possède un indice de réfraction compris entre 1,5 et 2,0.

4. Cellule à cristaux liquides selon la revendication 3, caractérisée en ce que la couche isolante (7) présente un indice de réfraction de 1,8.

5. Cellule à cristaux liquides, selon l'une des revendications précédentes, caractérisée en ce que la couche isolante (7) possède une propriété d'orientation de la substance limitrophe à caractéristiques de cristaux liquides.

6. Cellule à cristaux liquides selon l'une des revendications précédentes, caractérisée en ce que la ligne (5) de transmission de données et/ou le contact (6) de jonction sont constitués par une matière transparente.

7. Cellule à cristaux liquides selon la revendication 6, caractérisée en ce que la ligne (5) de transmission de données et/ou le contact (6) de jonction sont en oxyde d'étain-indium.

8. Cellule à cristaux liquides selon l'une des revendications précédentes, caractérisée en ce que la ligne (5) de transmission de données et le contact (6) de jonction sont appliqués en une seule phase opératoire.

9. Cellule à cristaux liquides selon la revendication 1, caractérisée en ce qu'une couche antiréfléchissante recouvre l'électrode (4) de formation d'images, et/ou la ligne (5) de transmission de données et/ou le contact (6) de jonction.

10. Cellule à cristaux liquides selon la revendication 9, caractérisée en ce que la couche antiréfléchissante possède une propriété d'orientation de la substance limitrophe à caractéristiques de cristaux liquides.

11. Cellule à cristaux liquides selon la revendication 9, caractérisée en ce que la couche antiréfléchissante possède une propriété de matière isolante.

# FIG.1